# EUROPÄISCHE PATENTANMELDUNG

(11) **EP 2 133 260 A1**
(43) Veröffentlichungstag der Anmeldung: **16.12.2009**
(21) Anmeldenummer: 09162287.8
(22) Anmeldetag: 09.06.2009
(51) Int. Cl.: B62D 51/02, B62K 3/00, B62K 15/00, B62M 7/00

(54) **Zusammenlegbares Elektromobil**

(30) Priorität: 11.06.2008 CH 8892008
(71) Anmelder: Kanne, Peter H., 8803 Rüschlikon (CH)
(72) Erfinder: Kanne, Peter H., 8803 Rüschlikon (CH)
(74) Vertreter: Feldmann, Clarence Paul

(57) **Zusammenfassung**

Die Erfindung betrifft ein zusammenlegbares Elektromobil zur Beförderung eines stehenden Fahrers. Dieses umfasst mindestens ein Vorderrad 2 und zwei Hinterräder 3, welche beidseitig einer Stehplattform 5 angebracht sind, sowie einen Elektromotor 6 und eine Batterie 7 und Bedienungsvorrichtungen 9 zum Lenken und zur Regulierung der Geschwindigkeit. Erfindungsgemäss sind an der Stehplattform 5 zwei Seitenwangen 28 angebracht, an denen je ein Hinterrad 3 einzeln an einer Radaufhängung 19 angebracht ist, wobei im Fahrzustand die Stehplattform 5 tiefer liegt als die Radaufhängungen 19 der Hinterräder 3.

## Beschreibung

### Technisches Gebiet

Die Erfindung betrifft ein zusammenlegbares Elektromobil zur Beförderung eines stehenden Fahrers umfassend mindestens ein Vorderrad, zwei Hinterräder mit einer dazwischen angeordneten Stehplattform, einen Elektromotor und eine Batterie, sowie eine Lenksäule und Bedienungsvorrichtungen zum Lenken und zur Regulierung der Geschwindigkeit.

### Stand der Technik

Elektromobile zum Befördern von Einzelpersonen sind mehr und mehr verbreitert. Viele derartige Fahrzeuge bieten einen Sitz für den Fahrer, beispielsweise Behindertenfahrzeuge und motorisierte Rollstühle.

Andere Elektromobile, bei welchen der Fahrer im Betrieb steht, oft auch Scooter genannt, werden von Jugendlichen gerne als sportliche Verkehrsmittel eingesetzt.

Nachteilig an solchen Fahrzeugen ist, dass diese für ältere Menschen, welche nicht mehr so gut zu Fuss sind aber noch keinen Rollstuhl brauchen, nicht geeignet sind. Diese Bevölkerungsgruppe bevorzugt ein Elektromobil, welches ihren Bedürfnissen angepasst ist. Sie wollen sich sicher fühlen und keine Angst haben müssen, umzukippen oder einen Unfall zu haben. Auf den sogenannten Scootern fühlen sich ältere Leute nicht sicher, weil diese nicht kippstabil und zu schnell sind.

Zudem sollte der Fahrer stehend transportiert werden, damit er einerseits schneller auf- und absteigen kann und andererseits etwa auf Augenhöhe mit seinen Begleitern ist, was ihm ein angenehmes Gefühl gibt.

Ältere Leute brauchen ein im Schritttempo fahrbares motorisiertes Fahrzeug, mit dem sie Freunde auf Spaziergängen begleiten können sowie in Shoppingzentren und im Alltagsleben unterwegs sein können. Dazu muss es zusammenlegbar sein, damit es in einem Auto mitgeführt werden kann und auch zum Lagern nicht unnötig Platz versperrt. Zudem soll die Handhabung des Elektromobils im zusammengelegten Zustand auch für die genannte Zielgruppe einfach sein.

In der WO 99/51484 ist ein zusammenlegbares, schmales Elektromobil beschrieben, welches für die hier genannte Zielgruppe zu kippelig und unsicher ist. Zudem muss die Front zum Manövrieren im zusammengelegten Zustand angehoben werden, was sehr mühsam sein kann. Die WO 03/037678 beschreibt verschiedene Falttechniken zum Zusammenlegen eines vierrädrigen Fahrzeuges mit Sitz und Rückenlehne, das für ältere Leute beschwerlich zu besteigen ist, vor allem, weil solche Leute naturgemäss öfters etwas korpulenter und daher unbeweglicher sind. Zudem ist das Fahrzeug im zusammengelegten Zustand nur aufrecht stehend fahrbar. Die Falttechniken scheinen eher kompliziert und störungsanfällig zu sein.

### Darstellung der Erfindung

Aufgabe der vorliegenden Erfindung ist es, ein eingangs erwähntes zusammenlegbares, für ältere Leute sicheres Elektromobil zu beschreiben, welches platzsparend, einfach und robust zusammengelegt werden kann und auch im zusammengelegten Zustand für ältere Leute leicht zu handhaben ist, insbesondere für den Transport in einem Automobil.

Die der Erfindung zugrunde liegende Idee besteht darin, dass an der Stehplattform zwei Seitenwangen angebracht sind, an denen je ein Hinterrad einzeln angebracht ist, wobei im Fahrzustand die Stehplattform tiefer liegt als die Radaufhängungen der Hinterräder. Dies führt dazu, dass das Elektromobil sehr platzsparend zusammengelegt werden kann, da keine Welle zwischen den Hinterrädern im zusammengelegten Zustand sperrt. Trotzdem können grosse Hinterräder verwendet werden, welche die Stabilität fördern und dem Fahrer ein Sicherheitsgefühl geben.

Bevorzugte Ausführungsformen sind in den Unteransprüchen angegeben.

### Kurze Beschreibung der Zeichnungen

Im Folgenden wird die Erfindung unter Beizug der Zeichnungen näher erklärt. Es zeigen
- Fig. 1: eine schematische perspektivische Darstellung eines erfindungsgemässen Elektromobils im Fahrzustand;
- Fig. 2: eine schematische Darstellung eines erfindungsgemässen Elektromobils im Fahrzustand von oben her gesehen;
- Fig. 3: eine schematische Darstellung eines erfindungsgemässen Elektromobils im zusammengelegten Zustand von der Seite her betrachtet.

### Wege zur Ausführung der Erfindung

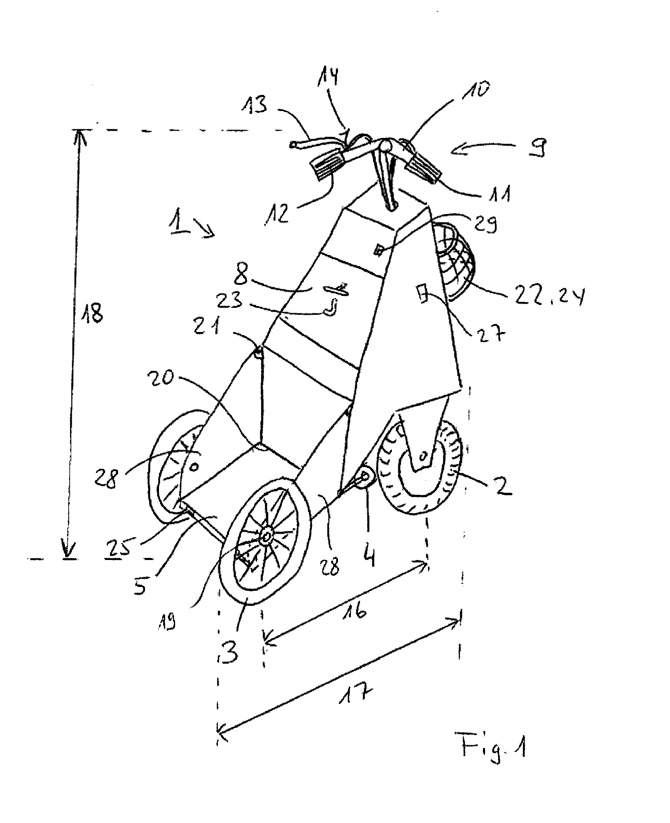

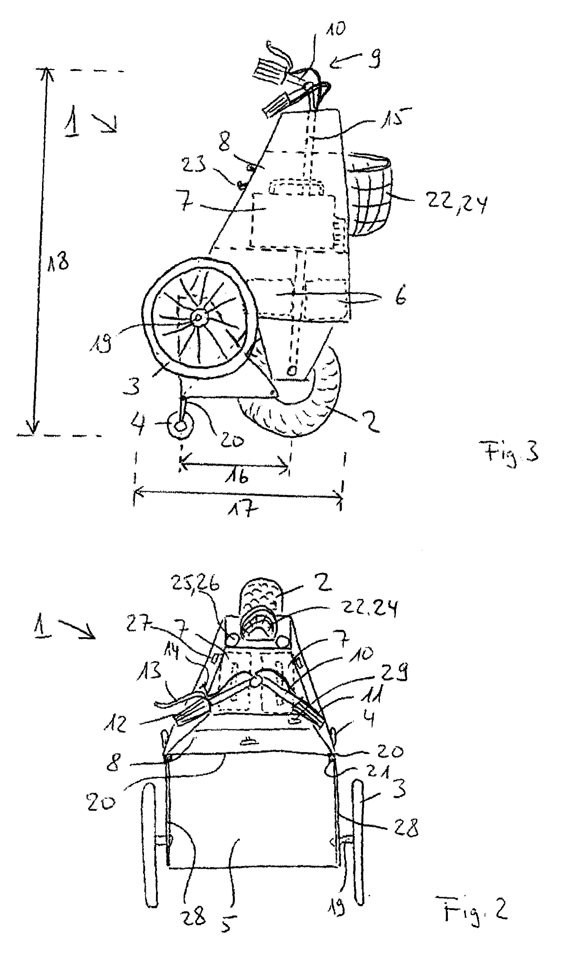

Die Bezugszeichen sind in allen Figuren gleich gewählt. Fig. 1 und 2 zeigen eine schematische Darstellung eines erfindungsgemässen Elektromobils 1 zur Beförderung eines stehenden Fahrers in einer bevorzugten Ausführung im Fahrzustand, wobei Fig. 1 eine perspektivische Ansicht ist und Fig. 2 die Ansicht von oben ist. Bezeichnungen wie vorne und hinten beziehen sich auf die Fahrtrichtung des Elektromobils 1. In der Fig. 3 zeigt ein erfindungsgemässes Elektromobil 1 in zusammengelegten Zustand in Seitenansicht.

Das Elektromobil 1 umfasst mindestens ein Vorderrad 2 und zwei Hinterräder 3, welche beidseitig einer Stehplattform 5 angebracht sind. Zudem umfasst es mindestens einen Elektromotor 6 und mindestens eine Batterie 7, welche den Elektromotor 6 speist, sowie eine Lenksäule 15 und Bedienungsvorrichtungen 9 zum Lenken und zur Regulierung der Geschwindigkeit. Erfindungsgemäss sind an der Stehplattform 5 zwei Seitenwangen 28 angebracht, an denen je eines der Hinterräder 3 einzeln an einer Radaufhängung 19 angebracht ist, wobei im Fahrzustand die Stehplattform 5 tiefer liegt als diese Radaufhängungen 19. Die Hinterräder 3 sind relativ gross gewählt, sie sind im +/- 20% Bereich von 40 cm hoch und von 30 mm breit. Dies verleiht dem Fahrer ein sicheres Gefühl beim Fahren. Insbesondere können mit solchen Rädern 3 auch Naturstrassen befahren werden, was mit kleinen Rädern, welche beispielsweise für Inlineskates bekannt sind, nicht gut möglich ist. Dadurch, dass die Hinterräder 3 oberhalb der Stehplattform 5 einzeln angeordnet sind, erübrigt sich eine durchgehende Welle zwischen den Hinterrädern 3. Stattdessen kann dieser Bereich einerseits zum Stehen genutzt werden, und andererseits zum platzsparenden Zusammenlegen, da andere Fahrzeugkomponenten im zusammengelegten Zustand zwischen den Hinterrädern 3 sein können. Ein weiterer Vorteil der genannten Hinterradanbringung an den Seitenwangen 28 besteht darin, dass die Stehplattform 5 nun so tief gewählt werden kann, dass ein Fahrer bequem von hinten aufsteigen kann, ohne ein Hindernis wie einen hohen Absatz zu überwinden. Bei einem seitlichen Aufstieg, wie es für Elektromobile üblich ist, ist der Fahrer gezwungen, ein Bein über eine Mittelachse des Fahrzeuges zu bringen, was erneut beschwerlich sein kann.

Die meisten Elektromobile verfügen über eine Sitzgelegenheit. Es hat sich nun erwiesen, dass die Kopfhöhe einer Person bei einer Haltung einen psychologisch wichtigen Aspekt darstellt. Eine sitzende Person fühlt sich in der Umgebung von stehenden Personen eher herabgesetzt, da die stehenden Personen auf sie hinunter schauen. Andererseits ist es unangenehm, sehr viel höher als die anderen Leute zu stehen, da so auf diese herabgesehen wird und man selbst aus einer Masse herausragt, was auch nicht angenehm ist. Zudem reduziert sich das Sicherheitsgefühl beim Stehen proportional zur Stehhöhe. Eine leichte Gehschwäche fällt am wenigsten auf, wenn die betreffende Person unwesentlich höher steht als die in der Umgebung stehenden Personen. Zudem ist die Mobilität für Leute, die zwar noch gut gehen können aber beim Gehen schnell ermüden, am grössten, wenn sie jeweils ohne Mühe auf ein Elektromobil aufsteigen können, eine kurze Strecke fahren und wieder absteigen. Müssten sie sich zum Fahren zwischen Sitz und Lenker zwängen und sich hinsetzen, und am Ende sich wieder erheben und absteigen, dann würden sie sich vielleicht überlegen, ob sich der Aufwand wirklich lohnt und die Bewegung zu einem nahen Ziel nach Möglichkeit unterlassen. Der Aufwand zum Ein- und Aussteigen ist bei Fahrzeugen mit Sitz viel grösser. Beim erfindungsgemässen Fahrzeug ist daher der Aufstieg auf die Stehplattform 5 für den Fahrer von hinten frei zugänglich, ohne dabei ein Hindernis überwinden zu müssen. Ein weiterer Vorteil der erfindungsgemässen Ausführung ist der kurze Radstand. Dieser verschafft einerseits ein stabiles Stehen für den Fahrer, da die Hinterräder auch relativ weit beabstandet sind, andererseits ermöglicht dies ein kleines Zusammenlegen.

Die Bedienungsvorrichtungen 9 sind vorzugsweise an einer Lenkstange 10 an der Lenksäule 15 angebracht. Sie umfassen beispielsweise einen Drehgriff 11 zur Geschwindigkeitsbegrenzung, einen Griff 12 mit einem Bremshebel 13 und/oder eine Feststellbremse 14.

Um die Stabilität des Elektromobils insbesondere beim Fahren im Unwegsamen Gelände oder beim Auffahren auf ein Trottoir zu erhöhen, kann dieses vorzugsweise zwei Vorderräder 2 aufweisen. Erfindungsgemäss treibt der Elektromotor das Vorderrad resp. die Vorderräder 2 an. In einer bevorzugten Version sind je zwei Elektromotoren 6 und Batterien 7 vorgesehen. Insbesondere bei der Verwendung von zwei Vorderrädern 2 hat es sich als vorteilhaft erwiesen, wenn jedes dieser Vorderräder 2 mit seinem eigenen Elektromotor 6 und dieser mit seiner eigenen Batterie 7 betrieben wird.

Diese Vorderräder 2 sollen ebenfalls geländegängig ausgestaltet sein, vorzugsweise im +/- 20% Bereich von 30 cm hoch und von 10 cm breit sein und zudem über ein gutes Profil verfügen, damit sie gut angetrieben werden können.

Vorderradantrieb hat gegenüber dem oft bevorzugten Hinterradantrieb einige Vorteile. Es wird kein Differenzial gebraucht und der Platz im Bereich der Hinterräder 3 ist frei von Antriebsmechanismen, sodass die Stehplattform 5 leicht ausgestaltet werden kann und genügend Platz bietet für den Fahrer.

Vorzugsweise sind Elektromotoren 6 und Batterien 7 im Bereich der Lenksäule 15 angebracht. Dadurch wird gewährleistet, dass das Vorderrad 2 genügend belastet ist, was für den Antrieb wichtig ist. Zusatzgewicht wird vom Fahrer auf das Vorderrad 2 gebracht, der seinen Schwerpunkt im Fahrzustand im Bereich zwischen den Hinterrädern 3 und dem Vorderrad 2 hat. Um den Schwerpunkt möglichst niedrig zu halten, sind die Elektromotoren 6 vorzugsweise direkt über dem Vorderrad 2 angebracht und die Batterien 7 in einem dafür vorgesehenen Batteriefach 8 im Bereich der Lenksäule 15 oberhalb der Elektromotoren 6. Die Batterien 7 sind vorzugsweise leicht abnehmbar, sodass sie, beispielsweise wenn das Elektromobil 1 in ein Fahrzeug eingeladen werden soll, schnell herausgenommen werden können. Dadurch wird das Elektromobil 1 leichter für Handling und Transport. Dazu verfügen die Batterien 7 vorzugsweise über Streckanschlüsse, welche beim Hineinstellen in das Batteriefach 8 die nötigen Kontaktverbindungen herstellen für den Betrieb. Andererseits verfügt das Elektromobil 1 aber auch über eine mit einem Ladegerät verbundene Steckdose und ein Netzkabel zum Laden der Batterien 7 im eingebauten Zustand.

Vorzugsweise sind eine oder mehrere Vorrichtungen zur Gepäckmitführung 22 angebracht. Dies kann beispielsweise ein Korb 24 im vorderen Bereich des Elektromobils 1 sein, und/oder ein Haken 23, der beispielsweise am Batteriefach 8 angebracht sein kann. Der Korb 24 ist vorzugsweise abnehmbarer oder zusammenlegbarer, damit er keinen unnötigen Platz braucht beim Versorgen oder beim Transport in einem Fahrzeug.

Weitere fahrsicherheitstechnische Komponenten, welche am Elektromobil 1 angebracht sein können, umfassen optische Sicherheitsvorrichtungen 25 wie Leuchtmittel 26 und/oder Reflektoren 27. Die Leuchtmittel 26 sind bevorzugt LEDs, weil diese wenig Strom verbrauchen und sind nach vorne und bei Bedarf auch nach hinten gerichtet. Üblicherweise wird weiss für vorne und rot für hinten verwendet. Zusätzlich können Reflektoren 27 angebracht werden, beispielsweise seitlich und hinten, am unteren Rand der Stehplattform 5.

Zum Benutzen des Elektromobils kann sich ein Fahrer von hinten auf die zwischen den Hinterrädern 3 angeordnete, etwa 8-15 cm hohe Stehplattform 5 stellen. Die Seitenwangen 28 verleihen dem Fahrer ein zusätzliches Gefühl von Sicherheit, weil seine Füsse so niemals an die Hinterräder 3 kommen können. An den Griffen 11, 12 hält er sich fest.

Mit einem Schlüssel wird ein entsprechendes Schoss 29 betätigt, wodurch das Elektromobil 1 fahrbereit wird. Der Fahrer löst daraufhin die Feststellbremse 14, hält sich an beiden Griffen 11, 12 und betätigt vorsichtig den Drehgriff 11, wodurch sich das Elektromobil 1 mit dem darauf stehenden Fahrer in Bewegung versetzt. Das Elektromobil 1 hat eine Höchstgeschwindigkeit von etwa 5 km/h, was Schritttempo entspricht. Bergauf und bergab sind die Geschwindigkeiten entsprechend langsamer resp. schneller, auch das Gewicht des Fahrers spielt eine Rolle. In einer bevorzugten Ausführung lässt sich die Höchstgeschwindigkeit auch nach Bedarf des Fahrers ändern. Der Fahrer muss somit keine Angst haben, zu schnell zu werden. Durch Ziehen des Bremshebels 13 kann der Fahrer die Geschwindigkeit reduzieren, durch Betätigen der Feststellbremse 14 kann schliesslich wieder der Parkzustand erreicht werden. Nun kann der Fahrer absteigen, um beispielsweise Besorgungen zu machen und weiterfahren, oder den Schlüssel ziehen und sich entfernen.

Im zusammengelegten Zustand steht das Elektromobil 1 erfindungsgemäss auf mindestens drei Rädern und kann in diesem Zustand stets noch durch die Bedienungsvorrichtungen 9 zum Manövrieren angetrieben werden. Nun ist der Achsabstand 16 zwischen Vorderachse und Hinterachse kleiner als im Fahrzustand, vorzugsweise nur noch etwa halb so gross oder kleiner, doch das Fahrzeug steht noch stabil und kippt nicht. Vorzugsweise ist die Höchstgeschwindigkeit im zusammengelegten Zustand geringer als im Fahrzustand, damit beim Manövrieren keine Unfälle passieren. Einstellungen können es erlauben, dass das Elektromobil 1 mindestens im zusammengelegten Zustand rückwärts betrieben werden kann. Dies kann zum Parkieren hilfreich sein.

Zum Zusammenlegen ist die Stehplattform 5 mit den Hinterrädern 3 vorzugsweise schwenkbar am Elektromobil 1 angebracht. Dafür ist an der schwenkbaren Achse ein Scharnier 20 vorgesehen und Arretierungen 21, welche zum Zusammenklappen gelöst werden müssen. Diese Arretierungen 21 können Handschrauben sein oder federgespannte Bolzenverschlüsse, die durch Ziehen an einem Seilzug gelöst werden können.

Beim Hochschwenken der Stehplattform 5 werden vorzugsweise zwei Hilfsräder 4, welche ebenfalls an der Stehplattform 5 angebracht sind, derart nach unten geschwenkt, dass sich das Elektromobil 1 auf diesen abstützt und im zusammengelegten Zustand manövrierbar ist. Diese Hilfsräder 4 sind viel kleiner als die anderen Räder und dienen lediglich dem Stehen und Manövrieren des Elektromobil 1 im zusammengelegten Zustand. Der Achsabstand zwischen Vorderrädern 2 und Hilfsrädern 4 ist wiederum etwa um die Hälfte oder mehr verkleinert gegenüber dem im Fahrzustand, doch weil die Hilfsräder 4 so viel kleiner sind als die Hinterräder 3, steht das Elektromobil 1 auch so stabil.

Erfindungsgemäss wird im zusammengelegten Zustand, verglichen mit dem Fahrzustand, die Gesamtlänge 17 des Elektromobils 1 verkleinert, während seine Gesamthöhe 18 im wesentlichen gleich bleibt. Dadurch lässt sich das Elektromobil 1 wie gewohnt bedienen. Zum Unterbringen in einem Kofferraum eines Fahrzeuges kann das Elektromobil 1 eine Rampe hinauffahren.

Sobald die Höhe erreicht ist, kann das Elektromobil 1 nach hinten umgekippt werden und sich auf seinen beiden Hinterrädern 3 und seinen Hilfsrädern 4 abstützen. In diesem Zustand kann es bequem gestossen werden. Eine weitere Feststellbremse kann die Fixierung im Kofferraum sicherstellen.

Das erfindungsgemässe Elektromobil 1 bietet eine weitere Möglichkeit des Ein- uns Ausladens in ein Fahrzeug. Sobald die Arretierungen 21 gelöst sind, schenken die Hilfsräder 4 auf den Boden, sodass das Elektromobil 1 vorübergehend auf allen 5 Rädern 2, 3, 4 steht. Nun lässt sich das Vorderrad resp. die Vorderräder 2 durch Betätigung der Drehgriffs 11 antreiben und eine Rampe hinauffahren, während der Fahrer unten stehen bleibt und lediglich die Arme etwas anhebt. Durch die schwenkbare Stehplattform 5 passt sich diese der Neigung an und die Lenkstange 10 wird gesenkt. Wenn das Vorderrad resp. die Vorderräder 2 keinen Bodenkontakt mehr haben, hat das Elektromobil 1 bereits seine Höhe erreicht und kann mühelos auf den hinteren vier Rädern 3, 4 nach vorne gestossen werden.

Weitere technische Verbesserungen für komfortables Handling wie Griffe am Batteriegehäuse etc. sind vorgesehen.

### Bezugszeichenliste

- 1: Elektromobil
- 2: Vorderrad
- 3: Hinterrad
- 4: Hilfsrad
- 5: Stehplattform
- 6: Elektromotor
- 7: Batterie
- 8: Batteriefach
- 9: Bedienungsvorrichtungen
- 10: Lenkstange
- 11: Drehgriff
- 12: Griff
- 13: Bremshebel
- 14: Feststellbremse
- 15: Lenksäule
- 16: Achsabstand
- 17: Gesamtlänge
- 18: Gesamthöhe
- 19: Aufhängung eines Hinterrades
- 20: Scharnier
- 21: Arretierungen
- 22: Vorrichtung zur Gepäckmitführung
- 23: Haken
- 24: Korb
- 25: Optische Sicherheitsvorrichtungen
- 26: Leuchtmittel
- 27: Reflektoren
- 28: Seitenwangen
- 29: Schloss

## Patentansprüche

1. Zusammenlegbares Elektromobil zur Beförderung eines stehenden Fahrers umfassend mindestens ein Vorderrad (2), zwei Hinterräder (3), welche beidseitig einer Stehplattform (5) angebracht sind, mindestens einen Elektromotor (6) und eine Batterie (7), sowie eine Lenksäule (15) und Bedienungsvorrichtungen (9) zum Lenken und zur Regulierung der Geschwindigkeit, **dadurch gekennzeichnet, dass** an der Stehplattform (5) zwei Seitenwangen (28) angebracht sind, an denen je eines der Hinterräder (3) einzeln angebracht ist, wobei im Fahrzustand die Stehplattform (5) tiefer liegt als die Radaufhängungen (19) der Hinterräder (3).

2. Elektromobil nach Anspruch 1, **dadurch gekennzeichnet, dass** das Elektromobil im zusammengelegten Zustand auf mindestens drei Rädern stehend durch die Bedienungsvorrichtungen (9) zum Manövrieren angetrieben werden kann.

3. Elektromobil nach Anspruch 1 oder 2, **dadurch gekennzeichnet, dass** das Elektromobil zwei Vorderräder (2) aufweist.

4. Elektromobil nach einem der vorhergehenden Ansprüche, **dadurch gekennzeichnet, dass** der Achsabstand (16) zwischen Vorderachse/den Vorderachsen und der Hinterachse im zusammengelegten Zustand kleiner ist als im Fahrzustand.

5. Elektromobil nach einem der vorhergehenden Ansprüche, **dadurch gekennzeichnet, dass** die Stehplattform (5) mit den Hinterrädern (3) schwenkbar am Elektromobil angebracht ist, zum Zusammenlegen.

6. Elektromobil nach Anspruch 5, **dadurch gekennzeichnet, dass** an der Stehplattform (5) zwei Hilfsräder (4) derart angebracht sind, dass sich das Elektromobil im zusammengelegten Zustand auf diesen abstützbar und manövrierbar ist.

7. Elektromobil nach einem der vorhergehenden Ansprüche, **dadurch gekennzeichnet, dass** das oder die Vorderräder (2) durch den Elektromotor (6) antreibbar ist resp. sind.

8. Elektromobil nach einem der vorhergehenden Ansprüche, **dadurch gekennzeichnet, dass** die Höchstgeschwindigkeit auf Schritttempo begrenzt ist.

9. Elektromobil nach einem der vorhergehenden Ansprüche, **dadurch gekennzeichnet, dass** im zusammengelegten Zustand verglichen mit dem Fahrzustand seine Gesamtlänge (17) verkleinert ist.

10. Elektromobil nach einem der vorhergehenden Ansprüche, **dadurch gekennzeichnet, dass** die Höchstgeschwindigkeit im zusammengelegten Zustand geringer ist als im Fahrzustand.

11. Elektromobil nach einem der vorhergehenden Ansprüche, **dadurch gekennzeichnet, dass** das Elektromobil mindestens im zusammengelegten Zustand rückwärts betreibbar ist.

12. Elektromobil nach einem der vorhergehenden Ansprüche, **dadurch gekennzeichnet, dass** der Aufstieg auf die Stehplattform (5) für einen Fahrer von hinten frei zugänglich ist ohne Überwindung eines Hindernisses.

13. Elektromobil nach einem der vorhergehenden Ansprüche, **dadurch gekennzeichnet, dass** der Elektromotor (6) und die Batterie (7) im Bereich der Lenksäule (15) angebracht sind.

14. Elektromobil nach einem der vorhergehenden Ansprüche, **dadurch gekennzeichnet, dass** die Bedienungsvorrichtungen (9) an einer Lenkstange (10) an der Lenksäule (15) angebracht sind und vorzugsweise einen Drehgriff (11) zur Geschwindigkeitsbegrenzung, einen Bremshebel (13) und/oder eine Feststellbremse (14) umfassen.

15. Elektromobil nach einem der vorhergehenden Ansprüche, **dadurch gekennzeichnet, dass** die Batterie (7) leicht abnehmbar am Elektromobil angebracht ist.
